# EUROPÄISCHE PATENTSCHRIFT

(11) **EP 0 335 925 B1**
(45) Veröffentlichungstag und Bekanntmachung des Hinweises auf die Patenterteilung: **24.03.1993**
(21) Anmeldenummer: 88908135.2
(22) Anmeldetag: 06.10.1988
(51) Int. Cl.: B02C 4/06, B02C 9/04

(54) **VERFAHREN ZUR HERSTELLUNG VON GETREIDEMAHLPRODUKTEN UND GETREIDEMÜHLENANLAGE**
PROCESS FOR MANUFACTURING MILLED CORN PRODUCTS AND CORN MILL
PROCEDE DE FABRICATION DE PRODUITS CEREALIERS MOULUS ET MOULIN A CEREALES

(30) Priorität: 06.10.1987 CH 3893/87
(43) Veröffentlichungstag der Anmeldung: 11.10.1989
(73) Patentinhaber: BUEHLER AG, 9240 Uzwil (CH)
(72) Erfinder: BALTENSPERGER, Werner, CH-9242 Oberuzwil (CH); LIPPUNER, Christian, CH-9244 Niederuzwil (CH)
(74) Vertreter: von Samson-Himmelstjerna, Friedrich R., Dipl.-Phys.
(86) Internationale Anmeldenummer: CH8800184
(87) Internationale Veröffentlichungsnummer: WO8903247

(56) Entgegenhaltungen:
- WO-A-86/01128
- DE-A- 2 642 628
- DE-A- 2 730 166
- US-A- 1 396 712
- US-A- 2 742 235
- US-A- 2 986 348
- US-A- 4 220 287

## Beschreibung

### Technisches Gebiet

Die Erfindung betrifft ein Verfahren zur Herstellung von Getreidemahlprodukten wie Mehl, Griess, Dunst, usw., wobei mit dem System der Hochmüllerei das Gut vielfach walzenvermahlen und gesiebt wird.

### Stand der Technik

In der gewerblichen und industriellen Getreideverarbeitung ist heute eine starke Tendenz feststellbar, die zumindest teilweise nach rückwärts gerichtet zu sein scheint. Es ist dies die Forderung nach vollwertigen Grundnahrungsmitteln, was beim Getreide fast symbolisch dem auf Mahlsteinen gewonnenen Mehl und daraus gebackenen Vollkornbrot gleichgesetzt wird. Mehr oder weniger wird dabei der Vorwurf erho ben, dass das Mühlengewerbe als die Schnittstelle zwischen dem Landwirt einerseits und dem Bäcker bzw. Konsumenten anderseits eine Fehlentwicklung gegangen sei, da die Endprodukte wichtige Inhaltsstoffe entweder nicht mehr oder in beschädigter Weise enthalten würden. Bei dieser Betrachtung - die als Folge einer zu weitgehenden Arbeitsteilung und der daraus folgenden modernen wissenschaftlichen "Denkteilung" entspricht - werden aber einige Grundtatsachen übersehen:
- das Anbieten von guten Nahrungsmitteln im Rahmen der vorherrschenden Essgewohnheiten, dabei soll es dem Konsumenten überlassen bleiben, von welchen Nahrungsmitteln er z.Bsp. seine Ballaststoffe beziehen will,
- das Aufbereiten von Nahrungsmitteln mit möglichst wenig Verlusten während der Verarbeitung,
- die insbesondere auch energetisch betrachtet, ökonomische Verarbeitung der Nahrungsmittel,
- eine ernährungsphysiologisch gute Aufbereitung, sodass das Nahrungsmittel durch Mensch und Tier möglich vollständig, das heisst mit wenig Verlusten ausgewertet werden kann,
- eine gute Reinigung der Nahrungsmittel und eine hygienische einwandfreie Verarbeitung z.Bsp. auch in Bezug auf gesundheitsschädliche Bakterien, Pilze, usw.
- Das Anbieten einer Vielfalt an verschiedenen Nahrungsmitteln, auf Grund derselben Rohfrucht.

Vollkorn- bzw. Integral/dunkles Mehl wurde nach dem alten Steinmahlprinzip durch ein- oder mehrfaches Vermahlen der ganzen Körner und gegebenenfalls Aussieben von einem Teil der Schalen, bzw. der äussersten Kornschichten, gewonnen. Unbestritten hat dieses bis vor wenigen Jahrzehnten noch verbreitete auch als Flachmüllerei bezeichnete System den Vorteil, das nahezu alle Inhaltsstoffe des Kornes integral im Mehl bzw. Schrot bleiben und über Brot und andere Getreideprodukte eine hochwertige Nahrung für den Menschen bieten. Diese älteste Methode weist aber auch Nachteile auf. Die von der Integralvermahlung gewonnenen Produkte haben aus zwei Gründen besonders bei unsachgemässer Lagerung nur eine beschränkte Haltbarkeit. Die entsprechenden "Reformprodukte" sind meistens für den baldigen Konsum bzw. Verzehr bestimmt. Anderseits haften normalerweise Schmutz, Bakterien und Pilzsporen usw. nur an der Kornaussenseite an. Gerade diese aber sind es, die die Produkte qualitativ verschlechtern und die Lagerfähigkeit reduzieren, bzw. die Mahlprodukte unter schlechten Bedingungen nach kurzer Lagerzeit verderben würden.

Uebersehen wird ferner oft, dass das Getreidekorn stark unterschiedliche Partien aufweist. Isoliert gewonnen geben die verschiedenen Partien des Getreidekornes den Mahlprodukten Mehl, Griess, Dunst, Futtermehl, Kleie, je spezifische Eigenschaften, z.Bsp. spezifische Backeigenschaften. Solche, füreinen bestimmten Bedarf benötigten Produkte (Teigwarengriess, Weissmehl usw.) können bei der Integralvermahlung resp. Flachmahlverfahren nur teilweise abgetrennt werden. Erst die sogenanne Hochmüllerei erlaubt von den zur Zeit verbreiteten Essgewohnheiten verlangte Vielfalt an Mahlprodukten herzustellen, bei Einhalten der weiter oben aufgelisteten Bedingungen bzw. Grundtatsachen.

Je nachdem welche Partien des Korninneren für das Mehl gewonnen bzw. zusammengestellt werden, kann dem Endprodukt ein ganz spezielles Aroma gegeben werden (Vollkornbrot, Halbweissbrot, Zopf- bzw. Cakesprodukte usw.). Insbesondere aber erlaubt die Hochmüllerei jede Fraktion, die getrennt anfällt, wieder zu einem Mehl, also z.Bsp. auch zu einem Vollkronmehl zusammenzubringen oder zu einem Mehl mit erhöhtem Proteingehalt oder einem Mehl selbst mit mehr Keimanteil zusammenzumischen. Das System der Hochmüllerei gestattet somit eine wesentlich zielgerichtetere Kornaufbereitung. In Analogie dazu wird ja auch beim Fleisch nicht von einem Schlachtkörper "Integral-Gehacktes" hergestellt.

In der sogenannten Industriegesellschaft bietet somit das Hochmahlverfahren viele bis heute nur zu wenig ausgenutzte Vorteile. Eine mittelgrosse Mühle mit verhältnismässig wenig Betriebspersonal schafft eine Tagesproduktion von z.Bsp. 100 - 200 t Fertigprodukte. Die alte Steinmühle mit einem Mann, 100 - 200 Kg Tagesproduktion.

Die heute bekannte Hochmüllerei ist gekennzeichnet durch ein wiederholtes Vermahlen und Sichten nach jeder Mahlpassage. Dies gilt sowohl in der Weichweizen- wie Hartweizenmühle sowie der Maismühle. Bis vor zwei, drei Jahrzehnten wurde dieser Vorgang oft 15 bis 20 mal wiederholt. Mit der jüngeren Entwicklung konnte aber doch bewiesen werden, dass eine durchschnittliche zwölf- bis fünfzehnmai ige Vermahlung bei guter Betriebsführung zu denselben, Resultaten führt. Seit Beginn der 70er Jahre hat sich das kurze Hochmahlverfahren im Vergleich zu der davor liegenden langen Vermahlung für die Hochmüllerei fast weltweit als Stand der Technik durchgesetzt.

Ein guter Müller ist in der Lage, selbst aus stark variierenden Rohmaterialien durch Mischen der verschiedenen Getreidequalitäten und gezielter Mühlenführung insbesondere durch das sehr schonende stufenweise Aufschliessen der verschiedenen Partien jedes Getreidekornes den von dem weiterverarbeitenden Gewerbe, Bäcker, Teigwarenfabrik usw. geforderten Qualitätsstandard zu erreichen.

Um im Wettbewerb zu bestehen, muß die Mühle von einer bestimmten Rohmaterialmenge eine bestimmte Menge Endprodukte mit hoher Qualität und damit auch mit höherem Preis herausarbeiten. D.h., eine Getreidemühle ist stets bestrebt, eine hohe Ausbeute aus hellem Mehl, Grieß usw. zu erzielen. Nur bei Einhaltung der Qualitätskriterien arbeitet die Mühle gut. Ein wesentlicher Aspekt für die Wirtschaftlichkeit ist der Umfang der erforderlichen Betriebsmittel, der in der Mühle z.B. direkt abhängt von der Anzahl der Mahlund Siebpassagen. Alle Bestrebungen der jüngsten Zeit zeigen, daß bei der Hochmüllerei ohne direkte Verminderung, sei es der Ausbeute oder der Mahlproduktqualität, die Vermahlung nichtweiterverkürzt werden kann, sodaß diesbezüglich z.Zt. eine Stagnation in der Entwicklung des müllerischen Mahlverfahrens feststellbar ist.

### Darstellung der Erfindung

Die Erfindung hat sich zur Aufgabe gemacht, ein neues Hochmahlverfahren zu entwickeln, bei völliger Beibehaltung sowohl der Flexibilität bzw. Anpassbarkeit der Mühle an die jeweilige, spezifische Mahlaufgabe und der Endproduktqualität sowie der Kontrollierbarkeit des Mahlprozesses, jedoch einer Verbesserung der Wirtschaftlichkeit der Mühle.

Die Aufgabe wurde dadurch gelöst, daß ein Verfahren zur Herstellung von Getreidemahlprodukten, wie z.B. Mehl, Grieß, Dunst usw., nach dem Prinzip der Hochmüllerei, bei dem das Mahlgut vielfach, vorzugsweise zwölf- bis zwanzigmal walzenvermahlen und wiederholt gesiebt wird, entwickelt wurde, bei dem erfindungsgemäß das Mahlgut wenigstens zweimal über Doppelwalzenmahlstufen ohne Siebung zwischen den einzelmen Stufen der Doppelvermahlungen gegührt wird und anschließend an die Doppelvermahlung jeweils gesichtet wird.

Eine erste Versuchsreihe mit dem neuen erfindungsgemässen Verfahren hat zur Ueberraschung aller beteiligten Fachleute bestätigt, dass die gestellte Aufgabe vollumfänglich gelöst werden konnte. Interessant war jedoch die Beobachtung, dass eine Dreifachvermahlung ohne Zwischensichtung, so wie teils in den Anfängen der modernen Müllerei gearbeitet worden ist, signifikant schlechtere Ergebnisse zeigte. Teils kann bei den heute geforderten Mühlenleistungen dies auf eine zu starke Erwärmung des Gutes zurückgeführt werden, sehr wahrscheinlich aber auf die Tatsache, dass bei dreifacher Vermahlung ohne Zwischensichtung ein beachtlich grosser Anteil des Mahlgutes unzweckmässig zerkleinert wird, bzw. in einem zu frühen Stadium zu viel Feinanteil produziert wird. Hier liegt wohl eines der wichtigsten Geheimnisse des müllerischen Mahlens, nämlich dass jeder Arbeitsschritt für sich kontrollierbar und überschaubar durchgeführt wird. Der Obermüller weiss mit seiner Erfahrung an jeder Stelle, was er tut. Bei jeder Mahlstufe werden deshalb in der Praxis besondere Bedingungen erzeugt, z.Bsp. durch Einstellung des Mahlspaltes, besondere Riffelung, Differenzial der Mahlwalzen, Durchsatz durch eine Mahlpassage die diagrammatische Führung in der Mühle usw.

Als sehr wichtig hat es sich herausgestellt, dass jede der Mahlpassagen kontrollierbar und auch einstellbar bleibt, also auch beide Vermahlungen der Doppelmahlpassagen für sich. Damit aber bleiben zumindest in Bezug auf die Vermahlung beim neuen Lösungsweg die für die Praxis notwendigen Eingriffe erhalten. Das Müllern bleibt was es bei jedem guten Müller immer war, ein Kunsthandwerk, bei dem er auch mit allen seinen menschlichen Sinnen verantwortlicher Führer des Mahlablaufes ist.

Besonders vorteilhaft hat es sich herausgestellt, wenn das Gut in Kombination doppelt und einfach vermahlen wird, wobei das Mahlgut nach jeder Doppelmahlpassage und jeder Einfachmahlpassage gesichtet wird.

Ganz besonders bevorzugt wird dabei zumindest das erste und zweite Schrot (B₁ und B₂) sowie die erste und zweite Ausmahlung (C₁ und C₂) durch je eine Doppelvermahlung ohne Zwischensichtung geführt.

Dabei ist es möglich, das Gut vier bis sechs mal über Doppelmahlstufen ohne Siebung zwischen den Doppelvermahlungen zu führen und anschliessend an die Doppelvermahlung jeweils zu sichten.

Dies erlaubt, dass insbesondere auch für die Ausmahlung Doppelmahlpassagen und eine Kombination von zwei bis sechs einfache Vermahlungen mit je einer Zwischensichtung vorgenommen werden.

Damit aber konnte aufgezeigt werden, dass mit dem neuen Hochmahlverfahren für jeden spezifischen Fall mit einem "Mehr oder Weniger" die Vorteile der Erfindung ausnützbar sind, und so zum Beispiel eine Kostenreduktion für den Betrieb der Anlage von 10 bis 30 % gegenüber dem Stand der Technik ermöglicht wird.

Die neue Erfindung betrifft ferner eine Getreidemühle zur Herstellung von Getreidemahlprodukten wie Mehl, Griess, Dunst usw., mit dem System der Hochmüllerei, mit insbesonder zwölf bis welches eine zwanzig Mahlpassagen mit Walzenpaaren und einer vielzahl von jeweils nach einer Mahlpassage angeordneten Siebpassagen mit Plansichtern bzw. Sichterabteilen aufweist.

Diese neue Getreidemühle ist dadurch gekennzeichnet, dass sie wenigstens zwei Doppelmahlpassagen mit je zwei nach einander angeordneten Mahlwalzenpaaren ohne Sichtung zwischen den zwei Walzenpaaren aufweist.

Die neue Getreidemühle hebt sich besonders von der baulichen Seite stark von den bisherigen ab, indem eine wesentliche Arbeitskonzentration nun möglich geworden ist.

Ganz besonders bevorzugt ist die neue Getreidemühle mit je zwei Doppelmahlpassagen als eine Walzenstuhleinheit, als 8-Walzenstuhl ausgebildet, mit je zwei übereinander liegenden Mahlwalzenpaaren.

In der Form des 8-Walzenstuhles entsteht für den Müller nun auch eine neue Kontrollmöglichkeit, indem zwei Mahlstufen gleichzeitig und am gleichen Ort direkt überwacht werden können. Dies bedeutet, dass sowohl eine Veränderung z.Bsp. des ersten Mahlwalzenpaares wie auch des zweiten Mahlwalzenpaares ebenso aber der Einfluss der Veränderung des ersten Mahlwalzenpaares auf das Mahlergebnis des eventuell unveränderten zweiten Mahlwalzenpaares sofort beurteilt werden kann. Dies war bisher soweit der Anmelderin bekannt ist im Bereich der Hochmüllerei niemals möglich. Dadurch, dass zwischen jeder Vermahlung gesichtet wird, musste im Stand der Technik nicht nur die entsprechende Zeit, bis das Gut die Sichtung und die zweite Mahlstufe passiert hatte, abgewartet werden, sondern es wurde durch jede zwischengeschaltete Sichtung auch die Zusammensetzung des Mahlgutes verändert, indem einzelne Fraktionen auf andere Passagen geleitet wurden. Es hat sich gezeigt, dass der geringe Nachteil, dass in der zweiten Vermahlung ein geringer Anteil unnötig zerkleinert wird, mehr als kompensiert wird durch den Vorteil der unmittelbaren Kontrollmöglichkeit und auch des unmittelbaren Eingriffes auf beide Mahlwalzenpaare.

Die beste Lösung wird zur Zeit darin gesehen, wenn in Kombination Doppelmahlpassagen und Einfachmahlpassagen mitje einer Siebpassage nach der Doppelmahlpassage bzw. der Einfachmahlpassage verwendet werden.

Ganz besonders bevorzugt werden in Kombination sowohl AchtWalzenstühle wie Vier-Walzenstühle verwendet.

Es wird ferner vorgeschlagen, dass wenigstens zwei Achtwalzenstühle vorgesehen werden, wobei jedes der Mahlwalzenpaare eine eigene Mahlspaltverstellung aufweisen soll.

Bei den Achtwalzenstühlen sollen den obenliegenden Walzenpaaren je eine einstellbare Speiseregelung zugeordnet, und eine trichterförmige Produktführung zur direkten Uebergabe vom dem jeweils oben liegenden Walzenpaar an das untere Walzenpaar angeordnet werden, wobei jedem Walzenpaar Mahlspalteinstellvorrichtungen sowie auch je eine Kontrolltüre zur Musterentnahme nach jeder Mahlpassage zugeordnet sein sollte.

Bevorzugt werden ferner sowohl der Speiseraum des oberen Walzenpaares wie der Speiseraum des unteren Walzenpaares über Kanäle an eine Aspiration angeschlossen.

Entsprechend dem Bedarf des müllerischen Mahlens wird ferner vorgeschlagen, dass jedes Walzenpaar vollständig mit individueller Einstelleinrichtung, sowie Fremdkörpersicherung ausgerüstet ist, und die Mehrzahl der Walzen jedes Walzenpaares je unterschiedliche Umlaufgeschwindigkeiten (ein Differenzial) aufweisen, wobei bevorzugt die je übereinanderliegenden Walzenpaare eine gemeinsam gesteuerte Ausrückvorrichtung aufweisen.

Die Kontroll- und Servicearbeiten sind erleichtert, wenn die Walzen eines Walzenpaares in einer Horizontalebene angeordnet sind.

In Weiterführung der Erfindungsidee kann für die Gesamtanlage ein weiterer grosser Vorteil erreicht werden, wenn die Getreidemühle als Kompaktmühle konzipiert ist und eine Kompaktreinigung, wenigstens zwei Achtwalzenstühle sowie einen Grossplansichter aufweist.

Vielfach wird in der Konzentration von Arbeitsabläufen etwas Nachteiliges gesehen. Es hat sich aber im Falle der neuen Getreidemühle gezeigt, dass eine sinnvolle Konzentration die Ueberschaubarkeit erhöht und eine schnellere Reaktionsmöglichkeit erlaubt. Die Führung der Mühle wird damit erleichtert, dies obwohl in der weitüberwiegenden Zahl der Anwendungsfälle die gleichen Qualitätsstandards erreichbar sind wie im Stand der Technik. Der Grad der Komplexität des müllerischen Diagrammes konnte beachtlich reduziert werden. Die neuen Erfindungsgedanken geben denn auch eine verbesserte Ausgangslage für eine sinnvolle weitere Steigerung des Automatisierungsgrades, dadurch, dass die Mahlspaltverstelleinrichtung je einer Fernsteuerung zugeordnet sind und Rechnermittel zur Speicherung und Wiederabrufung der für jede Mahlaufgabe spezifischen Mahlspalteinstellung sowie aller übrigen Einstellwerte der Verarbeitungs- und Transportmittel.

Ist das Rohmaterial bekannt, ebenso die übrigen Parameter wie Umgebungstemperatur, Luftfeuchtigkeit, Zustand aller Aggregate (Riffelung der Walzen, Siebbespannung der Plansichter usw.), so kann die Mühle bei einmal guter Einstellung über längere Zeiträume selbst ohne direkte Anwesenheit von Fachpersonal völlig automatisch betrieben werden. Die neue Erfindung erlaubt somit einen grossen Beitrag an die Vervollkommnung der Hochmüllerei zu lei sten, dies aber nicht in einer weiteren Verkomplizierung, sondern vielmehr einer Vereinfachung - nahezu ohne Abstrich des müllerischen Beitrages.

In der Folge wird nun die Erfindung mit weiteren Einzelheiten näher erläutert.

### Kurze Beschreibung der Erfindung

Dabei zeigen
die Fig. 1 ein Achtwalzenstuhl
die Fig. 2 eine Ansicht der Antriebs- und Verstellmittel der Fig. 1.
die Fig. 3 eine neue Getreidemühle
die Fig. 4 ein Vermahlungs- und Sichtdiagramm entsprechend dem Stand der Technik
die Fig. 5 ein Beispiel eines neuen Vermahlungs-und Sichtdiagrammes
die Fig. 6 schematisch die Vermahlung und Sichtung mit einem weiteren Ausführungsbeispiel

### Wege zur Ausführung der Erfindung

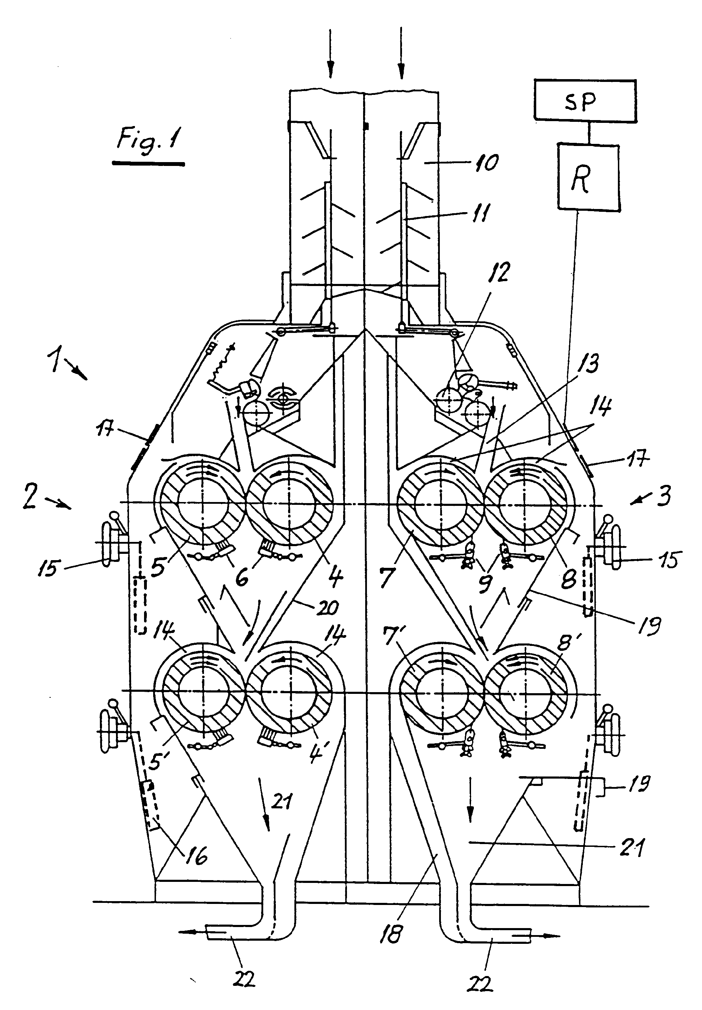

Es wird nun auf die Fig. 1 Bezug genommen. Der Achtwalzenstuhl 1 besteht aus zwei Hälften, die linke Hälfte ist als Schrotpassage 2 und einer rechten Hälfte als Ausmahlpassage 3 dargestellt. Die Schrotpassage 2 hat meistens Riffelwalzen 4 resp. 5, wobei im Bild die schneller laufende Walze 5 mit zwei Pfeilen markiert ist. Unterhalb der Walzen 4 und 5 befindet sich je eine Abstreifbürste 6. Bei den Ausmahlpassagen werden mehrheitlich glatte Walzen 7 resp. 8 und zur Sauberhaltung der Walzenoberfläche Abstreifmesser 9 verwendet. Je nach spezifischer Mahlarbeit wird das jeweils untere Walzenpaar 4', 5', bzw. 7', 8' die gleiche Walzengattung Grobriffel, Feinriffel oder als Glattwalzen ausgebildet sein, wie das entsprechende obere.

Das Gut wird über einen Speisezylinder 10 links oder rechts in den Walzenstuhl 1 geleitet. Dabei ist es nur bei ganz grossen Mühlenleistungen angezeigt, die linke und die rechte Walzenstuhlhälfte identisch auszuführen, derart, dass beide Hälften je die Hälfte der Gutmenge verarbeiten müssen. In dem Speisezylinder 10 ist ein Sensor 11 im Bild als sogenannter "Christbaum" ausgebildet, der eine Produktspeisung 12 steuert, sodass eine jeweils ankommende Gutmenge, die oben beim Speisezylinder 13 zufliesst, in gleicher Grösse durch die Produktspeisung ausgetragen wird. Das Gut wird über einen Speisekanal 13 direkt in den Mahlspalt geleitet. Eine starke Luftströmung wird in dem Speisekanal 13 erzeugt, was vorteilhafterweise durch zwei um die Walzen 4, bzw. 7, 8 herumgeführten Luftkanäle 14 sichergestellt werden kann. Das vom oberen Walzenpaar4, 5 geschrotete Gut wird über einen Produktabführtrichter 20 direkt in den Mahlspalt des unteren Walzenpaares 4', 5' geleitet. Auch beim unteren Walzenpaar4', 5' wird die Luft durch Luftkanäle 14 aspiriert. Das Mahlgut wird durch einen Produktabführtrichter 20 ein Uebergabeelement 22 den Zwischenüberhebungen übergeben. Alle vier walzenpaare 4, 5 - 4', 5' - 7, 8 - 7', 8' können durch eine Einstellvorrichtung 15 bezüglich des Mahlspaltes eingestelltwerden. Alle übrigen Einrichtungen wie Fremdkörpersicherung, Ein und Ausrückvorrichtung usw., werden wie bei normalen Vierwalzwerken verwendet. Hierzu wird vollinhaltlich auf die DE-PS Nr. 27 30 166 verwiesen. Es hat sich gezeigt, dass die in der erwähnten Veröffentlichung der Anmelderin gezeigte Baueinheit für das Walzenpaar mit grossem Vorteil auch bei den Achtwalzwerken einsetzbar ist, sodass im Falle einer Kombination von Achtwalzwerken und Vierwalzwerken in jedem Fall auf dem gleichen Grundaufbau des sogenannten Walzenpaketes ausgegangen werden kann, was ein weiterer Vorteil für den Hersteller wie für den Anwender ist.

In einzelnen Fällen kann es angezeigt sein, über dem unteren Walzenpaar eine Spiesewalze resp. Produktverteilwalze vorzusehen. Bevorzugt aber erfolgt für beide Walzenpaare die Walzenein- und Ausrückung über den gemeinsamen Sensor 11.

Auf der rechten Bildhälfte ist in dem Produktabführtrichter zusätzlich eine Luftführung 18 dargestellt. Dies kann besonders bei dunst- und mehlartigen Mahlgütern Vorteile bringen, da durch getrennte Luft- und Produktführung eine kompaktere Führung des fallenden Produktstromes möglich ist.

Jedes Mahlwalzenpaar (4, 5 - 7, 8) weist je eine eigene Mahlspaltverstelleinrichtung auf, welche aus einem Handrad 15 sowie den entsprechenden Verstellelementen besteht. Zusätzlich kann eine motorische Verstelleinrichtung 16 vorgesehen sein, wobei beide über eine Anzeige 17 den momentanen Abstandswert der zwei Mahlwalzen überwachen können. Ferner kann die motorische Verstellung über Rechner (R) und Speichermittel 58 automatisch erfolgen.

Jedem Mahlwalzenpaar ist ferner eine Kontrolltüre 19 zugeordnet, welche in der rechten Bildhälfte oben in geschlossener und unten in geöffneter Position dargestellt ist. Unabhängig, ob der Walzenstuhl in Betrieb ist oder nicht, kann die Kontrolltüre geöffnet werden. Dabei bleiben durch oben beschriebene zusätzliche Luftkanäle 14, 18 konstante Luftdruckverhältnisse und damit konstante Mahlverhältnisse aufrechterhalten.

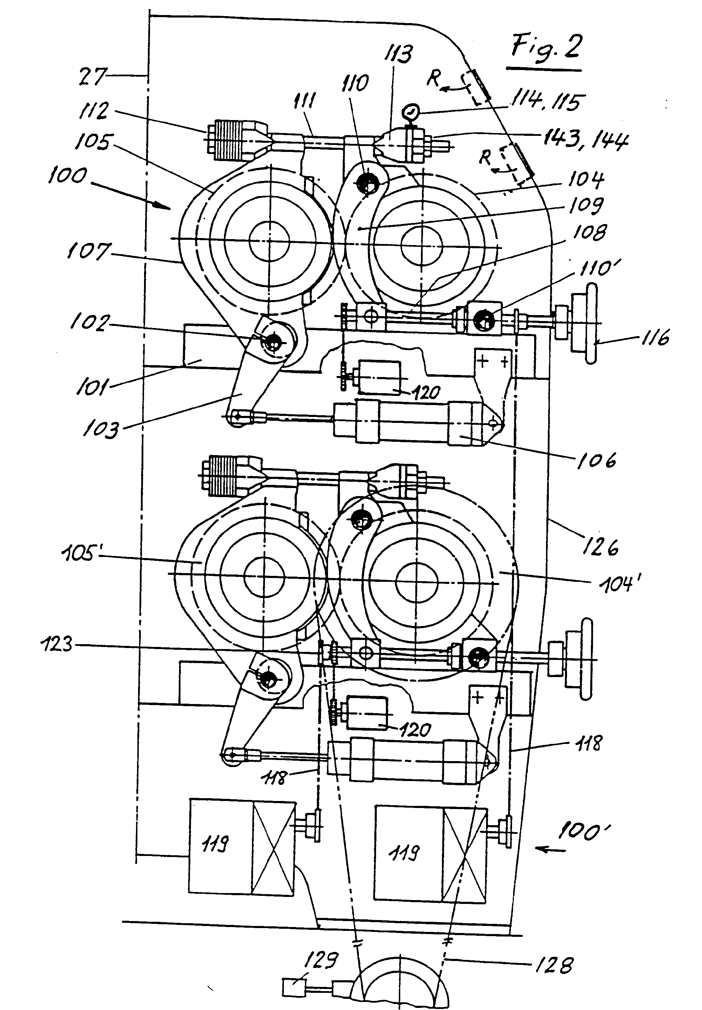

In der Folge wird nun Bezug genommen auf die Fig. 2, in welcher Verstellorgane als eine Baugruppe 100 und ein steuerbarer Verstellantrieb 100' erkennbar ist. Die zwei Mahlwalzen 104 und 105 sind auf einem gemeinsamen Träger 101 abgestützt. Die Loswalze 105 ist an einem ortsfesten Exzenterbolzen 102 verschwenkbar befestigt, wobei die Einund Ausrückung durch einen entsprechenden Hebel 103, sowie einem Ausrückzytinder 106 gesteuert wird. Durch die Verschwenkbewegung des Hebels 103 wird der Exzenterbolzen 102 verdreht und verursacht eine horizontale Verschiebung des unteren Teiles eines verschwenkbaren Lagergehäuses 107, sodass damit der Abstand der beiden Mahlwalzen voreingestellt werden kann. Für die genaue Einstellung der Mahlwalzen wäre diese Einrichtung schlechter geeignet. Diese wird denn auch nur benutzt, um die Mahlwalzen in eine eingerückte oder ausgerückte Stellung bzw. in zwei fixierte Stellungen zu bringen. Die eigentliche Feineinstellung der Mahlwalzen 104 und 105 geschieht über eine Verstellspindel 108, welche durch Drehung direkt einen Einstellarm 109 um ein ortsfestes Drehlager 110 bewegt. Das obere, kürzere Ende des Einstellarmes 109 ist über Zugstange 111 kraftschlüssig mit dem verschwenkbaren Lagergehäuse 107 verbunden. Die Kraftübertragung erfolgt über Schneiden, die auf der einen Seite Teil einer Ueberlast-Federsicherung 112 ist. Auf der gegenüberliegenden Seite ist an der Zugstange 111 ein einstellbarer Gegen-Haltekopf 113, sowie eine Druckmesseinrichtung 114 mit Druckanzeigevorrichtung 115 angeordnet. Um bei Servicearbeiten die Mahlwalzen parallel einstellen zu können, kann eine Korrektur auf der jeweils erforderlichen Seite über Einstellschrauben 143, 144 vorgenommen werden. Die Verstellspindel 108 ist durch Lager 111' ortsfest gehalten und kann nun über ein Handrad 116, welches eine direkt eingebaute Anzeigeuhr aufweist, oder aber über motorische Mittel, Uebertriebskette 118 sowie einem Getriebemotor bzw. Antriebsmotor 119 betätigt werden. Der Antriebsmotor 119 ist am Walzenstuhl 126 befestigt und ist über eine Rutschkupplung und einem Kettenrad 123 in direkter Verbindung mit der Verstellspindel 108.

Direkt mit der Verstellspindel 108 ist ferner ein Positionsmelder 120 verbunden, sodass jede Bewegung des Kettenrades 123 bzw. des Handrades 116 in dem Positionsmelder 120 registriert und an die gewünschten Stellen weitergeleitet wird. In Fig. 2 istferner ein Antriebsriemen 128 für den Antrieb der Mahlwalzen 104 und 105 resp. 104' und 105' nurangedeutet. Es ist möglich, auch in das Antriebssystem ein elektrisches Leistungsbedarfs-Mess- und Anzeigegerät 129 vorzusehen. Damit kann zum Beispiel die elektrische Leistungsaufnahme auf untere und obere Werte begrenzt, und bei Ueberschreiten des vorgewählten Bereiches, z.Bsp. die Mahlwalzen auseinander gerückt werden.

Alle Signale eines Walzenstuhles werden bevorzugt über einen Maschinenrechner R koordiniert und gesteuert, wobei der Maschinenrechner die benötigten Sollwerte von einem zentralen Computer mit Speicher Sp abrufen kann. Der Positionsanzeiger wird bevorzugt mit einem Positionsgrenzwertschalter ausgerüstet, der auf vorwählbare Grenzwerte einstellbar, und auf diese Weise eine automatische Fehleinstellung verhindern kann. Ein Positionsgrenzwertschalter hat den Vorteil, dass auch eine Fehlhandeinstellung damit verhindert werden kann, da Handrad wie auch automatische Verstellung eine entsprechende Wegverschiebung der Kette 118 ergeben. Der Positionsmelder 120 kann genauso wie der Verstellmotor 119 mit einem Eingabe-Ausgabegerät verbunden sein, das entsprechende Signale von dem Maschinenrechner erhält, bzw. abgibt, entsprechend mit Digitalanzeige und Handeingabetasten. Im gleichen Sinne kann die Druckmess- und Anzeigevorrichtung 114, 115 an den Ma schinenrechner angeschlossen werden. Je nach Ausbaugrad eines Walzwerkes können eine oder mehrere Sicherheiten am selben Walzwerk vorgesehen werden. Wenn zum Beispiel Riffelwalzen eingebaut werden, ist die Mahldrucküberwachung weniger sinnvoll, dagegen ist die Ueberwachung des Abstandes der Mahlwalzen, sei es durch den Positionsanzeiger oder einem Distanzmesser von Vorteil. Umgekehrt liegt es bei Glattwalzen, bei denen eine Drucküberwachung mehr Vorteile bringt. Mit einem Rechner und den angedeuteten Signalleitungen soll angedeutet werden, dass der Computer, bzw. Speicher eine ganze Anzahl, gegebenenfalls alle Walzenstühle in einer Mühle steuert, und wenn erforderlich, auch Regelfunktionen koordiniert.

Als ganz besonders vorteilhaft hat es sich ferner erwiesen, dass die Digitalanzeige einen Wert entsprechend einer Zeitmessung (Uhr 05.50) angibt und vorzugsweise einen identischen Wert entsprechend einer Stellungsanzeigevorrichtung bzw. der Anzeigeuhr des Handrades wiedergibt.

Der grosse Vorteil liegt darin, dass die Erfahrungswerte von nicht-automatisierten oder nichtfernsteuerbaren Walzenstühlen verglichen und für den Aufbau oder die Verbesserung entsprechender Steuerprogramme verwertbar sind.

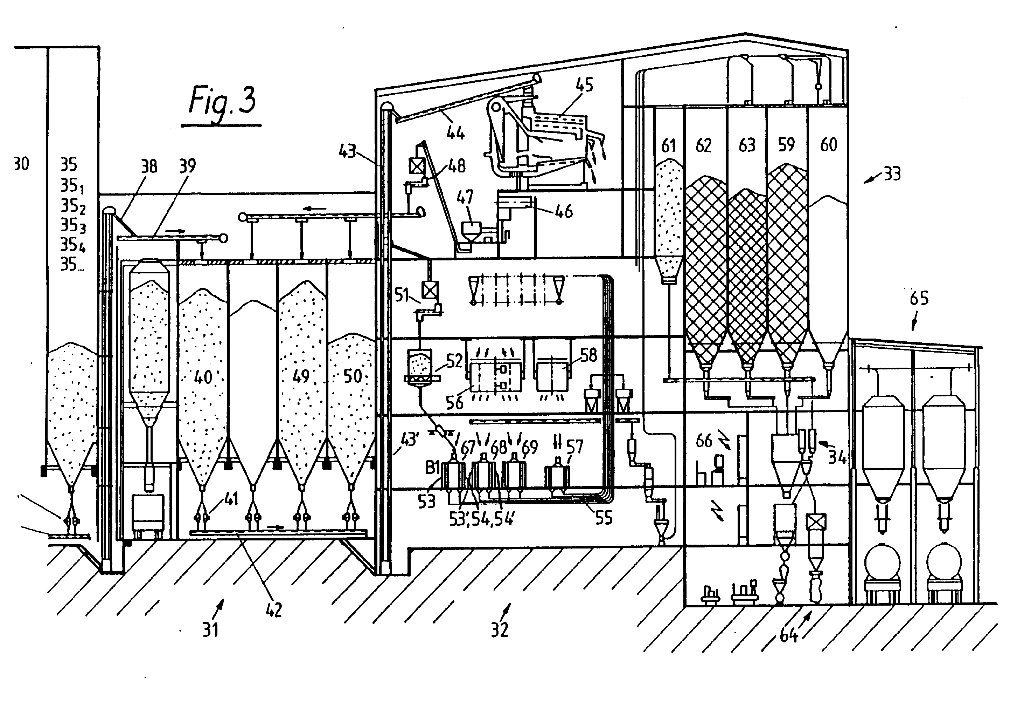

Die Fig. 3 zeigt nun eine komplette Getreidemühle stark vereinfacht dargestellt. Ganz grob betrachtet besteht die Stärkemühle aus einem Lagersilo 30 für das Lagergetreide, Misch- und Abstehkästen 31, einem eigentlichen Verarbeitungstrakt 32 sowie Fertigproduktzellen 33. Anschliessend an die Fertigproduktzellen 33 werden die Fertigprodukte direkt über ein Waagensystem 34 abgeliefert.

Im einzelnen geht nun der Arbeitsabiauf dann wie folgt: Aus Lagerzellen 35, 35₁, 35₂, 35₃, usw. wird die gewünschte Rohgetreidemischung erstellt und über Waagen 36, einen Horizontalförderer 37, einen Elevator 38, einen weiteren Horizontalförderer 39 in eine Mischzelle 40 gefördert. Von der Mischzelle 40 wird das noch ungereinigte Getreide abgezogen, über eine Waage41 einen Horizontalförderer42 sowie einen Elevator 43 in die Getreidereinigung 44 gefördert. In einer Kompaktreinigung 45 werden grosse Fremdbestandteile (Schrollen) abgesiebt, Steine ausgelesen, Schalenteile wegaspiriert. (Es wird vollinhaltlich auf die EP-A-318053 der Anmelderin Bezug genommen.) Anschliessend wird das Gut in einem Trieur46 gegeben, in welchem lange und runde Fremdsämereien entfernt werden, über eine Scheuermaschine 47 das Korngut von anhaftendem Schmutz befreit, die erforderliche Wassermenge in einer Intensivnetzeinrichtung 48 beigegeben und in einer Abstehzelle 49 für die erforderliche Zeit eingelagert. Das genetzte und etwa 12 bis 48 Stunden abgestandene Getreide wird aus einer der Abstehzellen 49 resp. 50 entnommen, über einen Elevator 43' überhoben und nach einer Zugabe von 0,1 bis 0,3% Wasser (Der Netzung 51 vor B₁ und einer Homogenisierzelle 52 direkt der ersten Mahlpassage (B₁ resp. der ersten Doppelmahlpassage 53 zugeführt.

Für die Vermahlung wird das Gut über Doppelmahlpassagen 53, 53', 54, 54' usw. geführt, wobei das Gut nach jeder Doppelvermahlung überein pneumatisches Fördersystem 55 in die Siebabteile eines Grossplansichters 56 gegeben wird. Die sogenannten hinteren Vermahlungen sind wie bisher als Einzelvermahlungen 57 ausgebildet. Von diesen wird das Gut nach dem Passieren eines Walzenpaares eines entsprechenden Vierwalzenstuhles in einen Plansichter 58 der üblichen Grösse der Standes der Technik gegeben. Die aus der Vermahlung bzw. von dem Grossplansichter 56 und dem Plansichter 58 resp. den weiteren anderen in der Mühle angewendeten Sieb- und Sichtaggregaten wie Griessputz maschine usw. anfallenden Fertigprodukte werden in Zellen 59, 60, 61, 62, 63 eingelagert und über eine Waage 34 nach Bedarf ausgeliefert. Dabei können diese über eine Absackstation 64 oder über einen Tankwagenverlad 65 für den Versand vorbereitet werden. Die gesamte Anlage wird von einer zentralen Steuerung mit allen notwendigen Rechnermitteln vom Obermüller geführt.

Ein weiterer interessanter Vorteil liegt darin, dass anschliessend nach den Doppelmahlpassagen auch Grossichter mit spezifisch grösseren Siebflächen, z.Bsp. 30 bis 60 % grösser als bei den Siebflächen nach den Vier-Walzenstühlen, einsetzbar sind, sodass hier nochmals eine Konzentration derArbeitsleistung möglich ist.

Nach derzeitigen Schätzungen kann mit der neuen Erfindung, bezogen auf Plansichter und Walzenstühle, total 10 bis 40 % Raum und Maschinen park eingespart werden; dies ohne die Nachteile von neuen unbekannten Mahlprinzipien bei Aufrechterhaltung von Mühlendurchsatz und Endproduktqualität. Beachtlich lässt sich auch der Energieverbrauch senken.

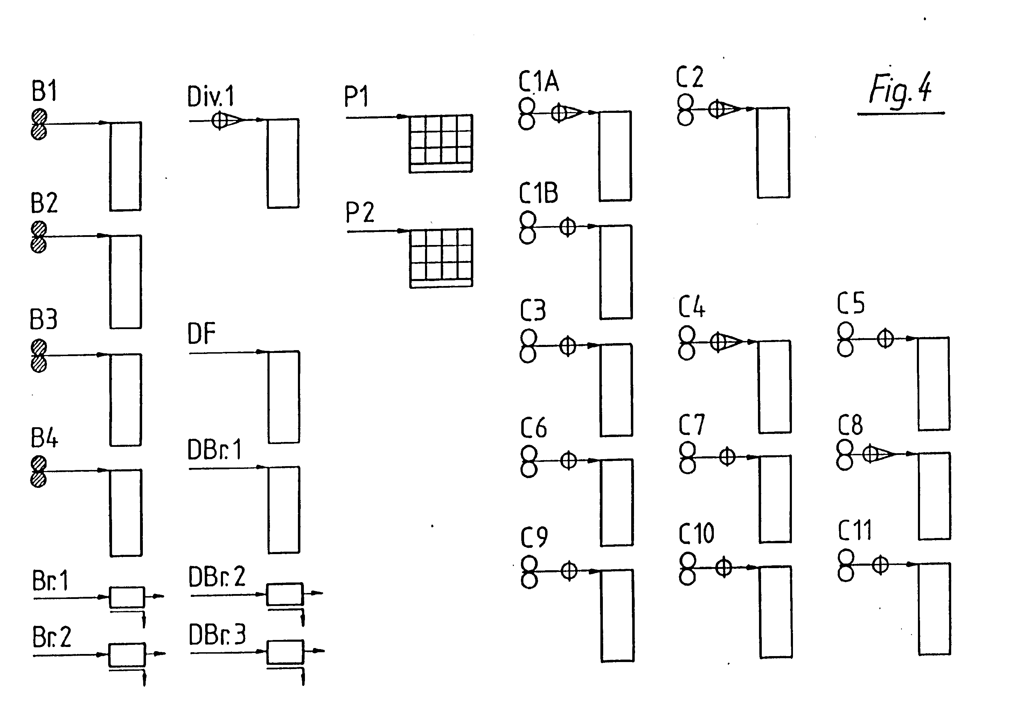

In der Figur 4 ist das Diagramm einer normalen Getreidemühle entsprechend dem Stand der Technik dargestellt. Die einfachen Schrotpassagen (B₁, B₂, B₃, B₄) sind mit schraffierten symbolischen Walzenpaaren dargestellt. Dies bedeutet, dass diese Walzen als Riffelwalzen ausgebildet sind.

Nach jeder einzelnen Vermahlung (B₁ bzw. B₂ usw.) wird das gewonnene Schrot jedesmal einer Sichtpassage übergeben, zwecks Aufteilung in verschiedene Granulationen. Ein Teil der Abstösse B₃ und B₄wird über die Kleiebürsten DBr.₁, DBr.₂ zwecks Reinigung der Schale geführt. Mit DBr.₁ sowie DBr.₂ wird der Durchfall der Kleiebürsten Br₁ bzw. Br. ₂ übernommen und unterteilt in Mehl und Kleie. Der Durchfall von DBr.₃ wird in dem Spezialplansichterabteil DBr.₁ gereinigt. Entsprechend wird das gesamte Filtermehl aus den pneumatischen Förderungen auf dem Plansichterabteil DF ausgesichtet. Einzelne Abstösse von B₁ und B₂ werden direkt in den Greissputzmaschinen P₁ bzw. P₂ gereinigt.

Die Ausmahlpassagen C₁ bis C₁₁ übernehmen die Abstösse bzw. Durchfälle von Div.₁, P₁ sowie P₂. Entsprechend den Schrotpassagen wird nun auch bei den Ausmahlpassagen nachjedereinzelnen Vermahlung das Mahlgut in die entsprechenden anschliessenden Sichterabteile geleitet. Der Produktfluss wird dabei gemäss aufsteigenden Zahl 1,2, 3 usw. von der ersten Mahlpassage zur ersten Sichtpassage, zweiter Mahlpassage zu zweiter Sichtpassage usw. geführt. Alle Durchfälle in allen Sichtpassagen können als fertiges Mehl abgezogen werden.

Bei den Ausmahlpassagen wird jeweils zwischen der eigentlichen Walzenvermahlung und dem Sichter ein Detacheur (zurAuflösung der Flocken), mit einem Kreis bezeichnet, oder ein Spezialdetacheurfür intensive Auflösung verwendet (Kreis mit Kegel).

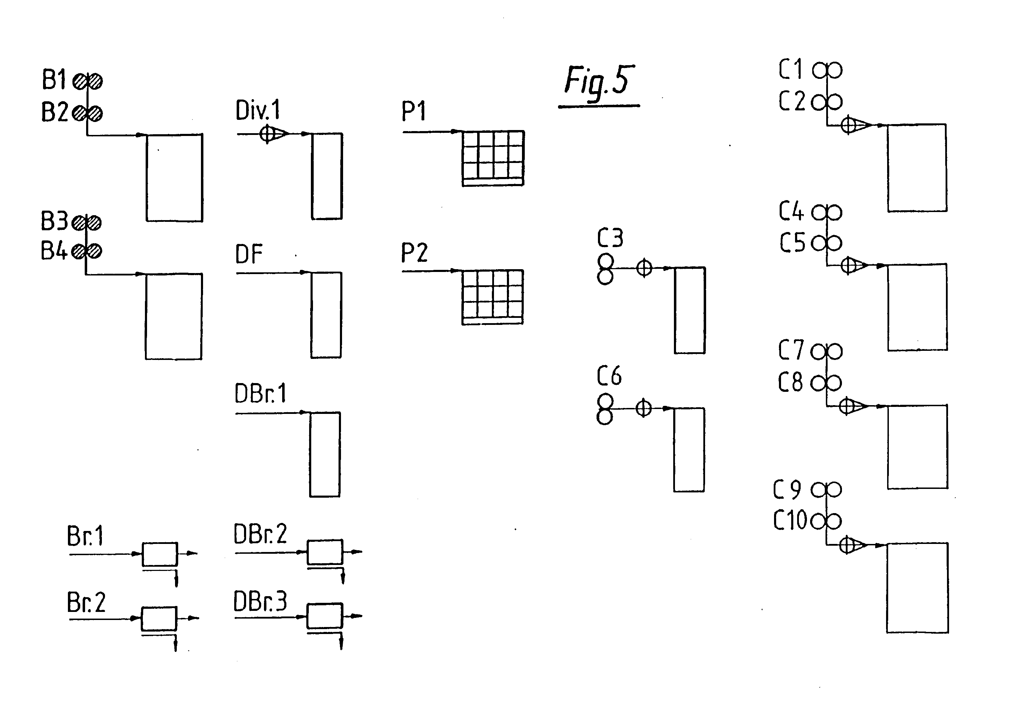

Das Diagramm in der Figur 5 zeigt an sich von Aufgabe und Mühlendurchsatzleistung dieselbe Mühlengrösse wie in der Fig. 4, wobei die Fig. 5 die neue Lösung ist, die Fig. 4 als Vergleich dazu der Stand der Technik.

Die jeweils zwei untereinander angeordneten Walzenpaare stellen in der Fig. 5 eine Doppelvermahlung dar. B₁ und B₂, die ersten beiden Schrotpassagen, sind zur ersten Doppelvermahlung 53 zusammengefasst. B₃ und B₄ stellen die zweite Doppelmahlpassage 53' dar. Die erste und die zweite Doppelmahlpassage sind entsprechend der Fig. 3 in einem ersten Achtwalzwerk 67 zusammengefasst. Sinngemäss ergeben die Ausmahlpassagen C₁, C₂ C₄ und C₅ das Achtwalzwerk 68, die Ausmahlpassagen C₇, C₈, Cg und C₁₀ das Achtwalzwerk 69. Lediglich die Ausmahlpassagen C₃ und C₆ sind als Einzelmahlpassagen ausgebildet, gleich wie in der Fig. 4, also dem Stand der Technik, und bilden hier zusammen ein Vierwalzwerk 57 entsprechend der Fig. 3.

Selbstverständlich handelt es sich bei dem Diagramm der Fig. 5 nur um ein bevorzugtes Ausführungsbeispiel, von dem nun, wie eingangs angeführt, eine sehr grosse Variationsmöglichkeit im Rahmen der neuen Erfindung möglich ist. Eine blosse Betrachtung der Fig. 4 und der Fig. 5 zeigt aber doch sehr eindrücklich die starke Vereinfachung, die mit dem neuen Lösungsgedanken möglich ist.

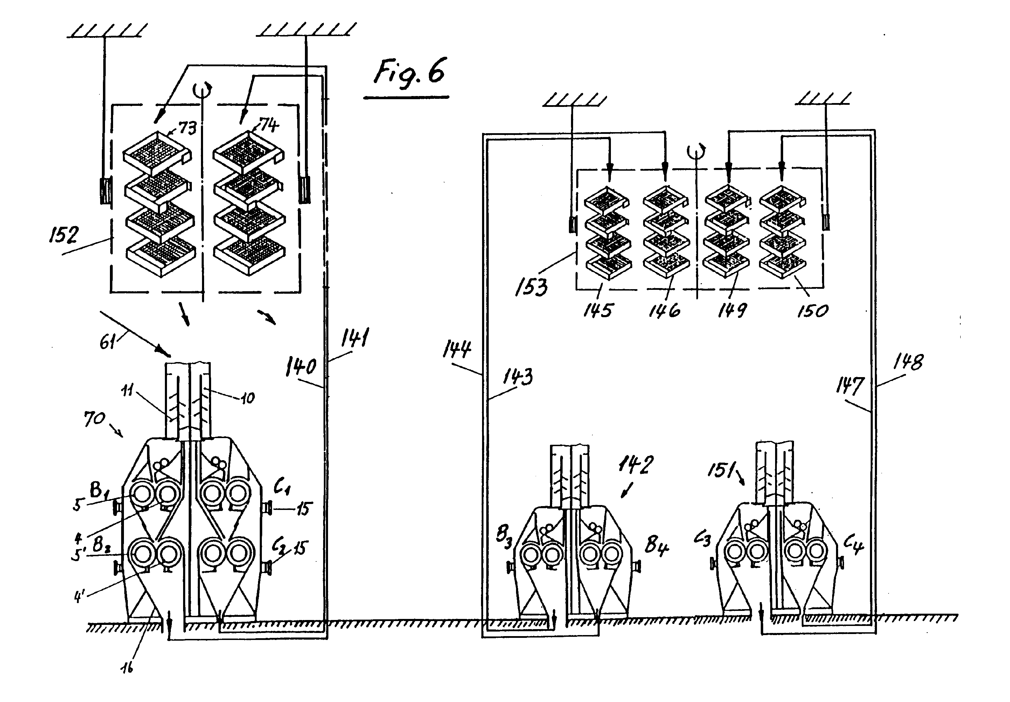

In der Folge wird nun auf die Fig. 6 Bezug genommen. Diese Fig. 6 zeigt die Kombination von Doppelmahlpassagen und Einfachmahlpassagen. Dabei sind die Doppelmahlpassagen B₁/B₂ und C₁/C₂ in einem einzigen Achtwalzwerk 70 zusammengefasst. Eine Förderleitung 140 bringt das Mahlgut der ersten Doppelvermahlung B₁/B₂ auf das erste Grosssiebabteil 73. Der dritte Schrot B₃, ebenso der vierte Schrot B₄ werden auf je eine Einfachmahlpassage in einen 4-Walzenstuhl 142 vermahlen. Ueberhebungen 143 resp. 144 bringen das dritte resp. vierte Schrot in die entsprechenden Siebabteile 145 resp. 146. Die ersten beiden Ausmahlpassagen C₁ und C₂ sind wiederum als Doppelvermahlung ausgeführt. Das von C₂ anfallende Gut wird über eine pneumatische Transportleitung 142 in das zweite Grosssiebabteil 74 geleitet. Die Ausmahlpassagen C₃ und C₄ sind wiederum als Einfachmahlpassagen (Vierwalzwerk 151) gebildet und die entsprechenden Produkte werden mit Ueberhebungen 147 resp. 148 in das entsprechende dritte resp. vierte Siebabteil 149 und 150 gefördert. Die folgenden Ausmahlpassagen, ebenso wie die nicht dargestellten hinteren Schrotpassagen können je nach speziellen Anforderungen der Mühle, sei es als Doppel- oder als Einfachmahlpassagen, ausgeführt sein. Die Grossflächensiebe 73, 74 usw. können in einen besonderen Grossplansichter 152 zusammengefasst sein, ebenso entsprechend die Siebabteile 145, 146, 149, 150 in einen Plansichter 153 entsprechend dem Stand der Technik.

## Patentansprüche

1. Verfahren zur Herstellung von Getreidemahlprodukten, wie z.B. Mehl, Griess, Dunst usw., nach dem Prinzip der Hochmüllerei, bei dem das Mahlgut vielfach, vorzugsweise zwölf- bis zwanzigmal walzenvermahlen und wiederholt gesiebt wird, dadurch gekennzeichnet,
daß das Mahlgut wenigstens zweimal über Doppelwalzenmahlstufen ohne Siebung zwischen den einzelnen Stufen der Doppelvermahlungen geführt wird und anschließend an die Doppelvermahlung jeweils gesichtet wird.

2. Verfahren nach Patentanspruch 1,
dadurch gekennzeichnet,
dass das Gut in Kombination doppelt und einfach vermahlen wird, wobei das Mahlgut nach jeder Doppelmahlpassage und jeder Einfachmahlpassage gesichtet wird.

3. Verfahren nach einem der Patentansprüche 1 oder 2,
dadurch gekennzeichnet,
dass zumindest der erste und zweite Schrot (B₁ und B₂) sowie die erste und zweite Ausmahlung (C₁ und C₂) durch je eine Doppelvermahlung ohne Zwischensichtung geführt wird.

4. Verfahren nach Patentanspruch 1 oder einem der Patentansprüche 2 bis 3,
dadurch gekennzeichnet,
dass das Gut vier bis sechs mal über Doppelmahlstufen ohne Siebung zwischen den Doppelvermahlungen geführt wird und anschliessend an die Doppelvermahlung jeweils gesichtet wird.

5. Verfahren nach einem der Patentansprüche 1 bis 4,
dadurch gekennzeichnet,
dass insbesondere für die Ausmahlung zwei bis sechs einfache Vermahlungen mit je einer Zwischensichtung vorgenommen werden.

6. Getreidemühle zur Herstellung von Getreidemahlprodukten wie z.B. Mehl, Griess, Dunst usw., nach dem Prinzip der Hochmüllerei, mit insbesonder zwölf bis zwanzig Mahlpassagen mit Walzenpaaren und einer Vielzahl von jeweils nach einer Mahlpassage angeordneten Siebpassagen,
dadurch gekennzeichnet,
daß wenigstens zwei Doppelmahlpassagen mit jeweils zwei nacheinander angeordneten Mahlwalzenpaaren ohne Sichtung zwischen den zwei Walzenpaaren vorgesehen sind.

7. Getreidemühle nach Patentanspruch 6,
dadurch gekennzeichnet,
dass je zwei Doppelmahlpassagen als eine Walzenstuhleinheit, als 8-Walzenstuhl, ausgebildet sind, mit je zwei übereinander liegenden Mahlwalzenpaaren.

8. Getreidemühle nach Patentanspruch 6 oder 7,
dadurch gekennzeichnet,
dass sie in Kombination Doppelmahlpassagen und Einfachmahlpassagen mit je einer Siebpassage nach der Doppelmahlpassage bzw. der Einfachmahlpassage verwendet.

9. Getreidemühle nach den Patentansprüchen 6 bis 8,
dadurch gekennzeichnet,
dass sie in Kombination sowohl 8-Walzenstühle und 4-Walzenstühle aufweist.

10. Getreidemühle nach den Patentansprüchen 6 bis 9,
dadurch gekennzeichnet,
dass sie wenigstens zwei Achtwalzenstühle aufweist.

11. Getreidemühle nach einem der Patentansprüche 6 bis 10,
dadurch gekennzeichnet,
dass jedes der Mahlwalzenpaare eine eigene Mahlspaltverstellung aufweist.

12. Getreidemühle nach den Patentansprüchen 6 bis 11,
dadurch gekennzeichnet,
dass bei den Achtwalzenstühlen die obenliegenden Walzenpaare je eine einstellbare Speiseregelung zugeordnet ist, und eine trichterförmige Produktführung zur direkten Uebergabevon dem jeweils oben liegenden Walzenpaar an das untere Walzenpaar angeordnet ist.

13. Getreidemühle nach den Patentansprüchen 6 bis 12,
dadurch gekennzeichnet,
dass jedem Walzenpaar Mahlspalteinstellvorrichtungen sowie auch je eine Kontrolltüre zur Musterentnahme nach jeder Mahlpassage zugeordnet ist.

14. Getreidemühle nach den Patentansprüchen 6 bis 13,
dadurch gekennzeichnet,
dass sowohl der Speiseraum des oberen Walzenpaares wie der Speiseraum des unteren Walzenpaares über Kanäle an eine Aspiration angeschlossen sind.

15. Getreidemühle nach den Patentansprüchen 6 bis 14,
dadurch gekennzeichnet,
dass jedes Walzenpaarvollständig mit individueller Einstelleinrichtung, sowie Fremdkörpersicherung ausgerüstet ist, und die Walzen jedes Walzenpaares je unterschiedliche Umlaufgeschwindigkeiten aufweisen, wobei bevorzugt die je übereinanderliegenden Walzenpaare eine gemeinsam gesteuerte Ausrückvorrichtung aufweisen.

16. Getreidemühle nach den Patentansprüchen 6 bis 15,
dadurch gekennzeichnet,
dass die Walzen eines Walzenpaares je auf gleicher Höhe angeordnet sind.

17. Getreidemühle nach den Patentansprüchen 6 bis 16,
dadurch gekennzeichnet,
dass sie eine Kompaktreinigung, wenigstens zwei Achtwalzenstühle sowie ein Grossplansichter aufweist.

18. Getreidemühle nach einem der Patentansprüche 1 bis 17,
dadurch gekennzeichnet,
dass sie Doppelmahlpassagen und Einfachmahlpassagen aufweist, wobei den Doppelmahlpassagen im Durchschnitt je 20 bis 50 % grössere Siebflächen zugeordnet sind, im Verhältnis zu den Siebflächen der Einfachmahlpassagen.

19. Getreidemühle nach den Patentansprüchen 6 bis 18,
dadurch gekennzeichnet,
dass die Mahlspaltverstelleinrichtung je einer Fernsteuerung zugeordnet sind und Rechnermittel zur Speicherung und Wiederabrufung der für jede Mahlaufgabespezifischen Mahlspalteinstellungen sowie aller übrigen Einstellwerte der Verarbeitungs- und Transportmittel.

## Claims

1. Process for the production of products ground from grain, such as e.g. flour, semolina, middlings, fine semolina, etc., in accordance with the high-grinding principle, wherein the material to be ground is roller-ground a number of times, preferably twelve to twenty times, and repeatedly screened, characterised in that the material to be ground is conducted at least twice through double roller grinding stages without screening between the individual stages of the double grindings, and sifted after each double grinding.

2. Process according to claim 1, characterised in that the material is ground by double and single grinding in combination, and the material is sifted after each double grinding passage and each single grinding passage.

3. Process according to one of claim 1 or 2, characterised in that at least the first and second breaks (B₁ and B₂) and also the first and second reductions (C₁ and C₂) are conducted through in each case a double grinding without intermediate sifting.

4. Process according to claim 1 or one of claims 2 or 3, characterised in that the material is conducted four to six times through double grinding stages without screening between the double grindings, and sifted after each double grinding.

5. Process according to one of claims 1 to 4, characterised in that, especially forthe reduction, two to six single grindings are effected with an intermediate sifting in each case.

6. Grain mill for the production of ground grain products such as flour, semolina, middlings, fine semolina, etc., using the high-grinding principle, with especially twelve to twenty grinding passages with pairs of rollers and with a plurality of screening passages, each provided after a grinding passage, characterised in that it comprises at least two double grinding passages with in each case two grinding roller pairs situated after one another without sifting between the two roller pairs.

7. Grain mill according to claim 6, characterised in that two in each case double grinding passages are arranged as one roller mill unit, as an 8-roller mill, with in each case two grinding roller pairs situated one above the other.

8. Grain mill according to claim 6 or 7, characterised in that it uses, in combination, double grinding passages and single grinding passages with a screening passage in each case after the double grinding passage or single grinding passage.

9. Grain mill according to claims 6 to 8, characterised in that it comprises in combination both 8- roller mills and 4-roller mills.

10. Grain mill according to claims 6 to 9, characterised in that it comprises at least two eight-roller mills.

11. Grain mill according to one of claims 6 to 10, characterised in that each of the grinding roller pairs has its own grinding gap adjustment arrangement.

12. Grain mill according to claims 6 to 11, characterised in that in the eight-roller mills each of the upper pairs of rollers has associated with it an adjustable feed regulator, and a funnel-shaped product guide is arranged for direct transfer from the respective upper roller pair to the lower roller pair.

13. Grain mill according to claims 6 to 12, characterised in that grinding gap adjustment devices are associated with each roller pair, also in each case an inspection door for sample taking after each grinding passage.

14. Grain mill according to claims 6 to 13, characterised in that both the feed compartment of the upper roller pair and the feed compartment of the lower roller pair are connected by means of ducts to an aspirator.

15. Grain mill according to claims 6 to 14,characterised in that each roller pair is fully provided with an individual adjustment device and also a preventive device against foreign matter, and the rollers of each roller pair rotate at respectively differing speeds, and preferably the pairs of rollers situated above each other in each case have a jointly controlled disengaging device.

16. Grain mill according to claims 6 to 15, characterised in that the rollers of a roller pair are each arranged at the same height.

17. Grain mill according to claims 6 to 16, characterised in that it has a compact cleaning arrangement, at least two eight-roller mills and a large plansifter.

18. Grain mill according to one of claims 1 to 17, characterised in that it has double grinding passages and single grinding passages, the double grinding passages having associated with them on average in each case 20 to 50 % larger screening surface areas in relation to the screening surface areas of the single grinding passages.

19. Grain mill according to claims 6 to 18, characterised in that the grinding gap adjustment devices are associated each with a remote control arrangement and computer means for the storing and retrieval of the grinding gap adjustments specific to each grinding task, also of all otherad- justment values of the processing and transporting means.

## Revendications

1. Procédé pour la production de produits de mouture de céréales, tels que farine, semoule, finots, semoule fine, etc., conformément au principe de la mouture haute, selon lequel la matière à moudre est moulue plusieurs fois entre des cylindres, de préférence douze a vingt fois, et est tamisée à plusieurs reprises, caractérisé en ce que la matière à moudre passe au moins deux fois par des étages de cylindres qui sont des étages de double mouture, sans tamisage entre les différents étages des doubles moutures et en ce qu'elle est blutée après chaque double mouture.

2. Procédé suivant la revendication 1, caractérisé en ce que la matière est soumise à une combinaison de doubles moutures et de simples moutures, la matière à moudre étant blutée après chaque passage de double mouture et après chaque passage de simple mouture.

3. Procedé suivant l'une des revendications 1 et 2, caractérisé en ce qu'au moins le premier et le deuxième broyages (Bᵢ et B₂) passent par une double mouture sans blutage intermédiaire et en ce qu'il en est de même au moins du premier et du deuxième convertissages (Ci et C₂).

4. Procédé suivant la revendication 1 ou l'une des revendications 2 et 3, caractérisé en ce que la matière passe quatre à six fois par des étages de double mouture, sans être tamisée au milieu des doubles moutures et en ce qu'elle est blutée après chaque double mouture.

5. Procédé suivant l'une des revendications 1 à 4, caractérisé en ce que, notamment pour le convertissage, il est réalisé deux à six simples moutures séparées chaque fois par un blutage intermédiaire.

6. Moulin à céréales pour la production de produits de mouture de céréales, tels que farine, semoule, finots, semoule fine, etc., conformément au principe de la mouture haute, comprenant notamment douze a vingt passages de mouture, comportant des paires de cylindres, et plusieurs passages de tamisage disposés à raison d'un après chaque passage de mouture, caractérisé en ce qu'il est prévu au moins deux passages de double mouture comportant chacun deux paires de cylindres de mouture disposées l'une derrière l'autre, sans blutage entre les deux paires de cylindres.

7. Moulin à céréales suivant la revendication 6, caractérisé en ce qu'à chaque deux passages de double mouture, on forme une unité d'appareil à cylindres, sous la forme d'un appareil à huit cylindres, avec chaque fois deux paires de cylindres de mouture disposées l'une au-dessus de l'autre.

8. Moulin à céréales suivant la revendication 6 ou 7, caractérisé en ce qu'il utilise en combinaison des passages de double mouture et des passages de simple mouture, un passage de tamisage étant disposé après chaque passage de double mouture et après chaque passage de simple mouture.

9. Moulin à céréales suivant les revendications 6 à 8, caractérisé en ce qu'il comprend en combinaison des appareils à huit cylindres et des appareils à quatre cylindres.

10. Moulin à céréales suivant les revendications 6 à 9, caractérisé en ce qu'il comprend au moins deux appareils à huit cylindres.

11. Moulin à céréales suivant les revendications 6 à 10, caractérisé en ce que chaque paire de cylindres de mouture comporte son propre réglage d'écartement des cylindres.

12. Moulin à céréales suivant les revendications 6 à 11, caractérisé en ce que dans les appareils à huit cylindres, les paires de cylindres supérieures sont pourvues chacune d'une régulation d'alimentation réglable et en ce qu'il est chaque fois prévu un guidage de produit en forme de trémie permettant le passage direct de la paire de cylindres supérieure à la paire de cylindres inférieure.

13. Moulin à céréales suivant les revendications 6 à 12, caractérisé en ce que chaque paire de cylindres est pourvue d'un dispositif de réglage d'écartemant des cylindres et d'une porte de contrôle permettant le prélèvement d'échantillons en aval de chaque passage de mouture.

14. Moulin à céréales suivant les revendications 6 à 13, caractérisé en ce que la chambre d'alimentation de la paire de cylindres supérieure et la chambre d'alimentation de la paire de cylindres inférieure sont reliées à une aspiration par des conduits.

15. Moulin à céréales suivant les revendications 6 à 14, caractérisé en ce que chaque paire de cylindres est entièrement équipée d'un dispositif de réglage individuel et d'une sécurité vis-à-vis des corps étrangers et en ce que les cylindres de chaque paire de cylindres possèdent des vitesses de rotation différentes, tandis que, de préférence, les paires de cylindres chaque fois disposées l'une au-dessus de l'autre comportent un dispositif de débrayage à commande commune.

16. Moulin à céréales suivant les revendications 6 à 15, caractérisé en ce que les cylindres de chaque paire de cylindres sont disposés à la même hauteur.

17. Moulin à céréales suivant les revendications 6 à 16, caractérisé en ce qu'il comporte un nettoyage compact, au moins deux appareils à huit cylindres et un plansichter de grandes dimensions.

18. Moulin à céréales suivant l'une des revendications 6 à 17, caractérisé en ce qu'il comprend des passages de double mouture et des passages de simple mouture, les surfaces de tamisage associées aux passages de double mouture étant en moyenne supérieures de 20 à 50 % aux surfaces de tamisage associées aux passages de simple mouture.

19. Moulin à céréales suivant les revendications 6 à 18, caractérisé en ce qu'à chaque dispositif de réglage d'écartement des cylindres, il est associé une commande à distance et un ordinateur permettant de mettre en mémoire et de rappeler les réglages d'écartement des cylindres spécifiques à chaque mouture à obtenir et toutes les autres valeurs de réglage des moyens de traitement et des moyens de transport.
